# DEMANDE DE BREVET EUROPEEN

(11) **EP 1 100 263 A1**
(43) Date de publication de la demande: **16.05.2001**
(21) Numéro de dépôt: 00403082.1
(22) Date de dépôt: 07.11.2000
(51) Int. Cl.: H04N 5/44, H04N 5/45

(54) **Appareil de réception et procédé d'affichage**

(30) Priorité: 10.11.1999 FR 9914127
(71) Demandeur: SAGEM SA, 75116 Paris (FR)
(72) Inventeur: Cuoq, Jean Noel, 92150 Suresnes (FR)
(74) Mandataire: Schmit, Christian Norbert Marie

(57) **Abrégé**

Un seul et même appareil (100) reçoit des informations en provenance du réseau (113) internet, et un flux de données de télévision grâce à une antenne (103). Les informations reçues du réseau internet sont traité par un navigateur (102). Ce navigateur est capable d'afficher, sur ordre à partir d'une télécommande (117, 109) des images issues du flux de données de télévision. Un décodeur (101) est programmé par le navigateur et me à sa disposition des images numériques dans une mémoire (107). Ces images correspondent à un programme de télévision sélectionner. Ces images sont affichées comme des éléments d'un pages internet. Leur provenance et leur format est décrit dans un fichier (108) dont la syntaxe est au format HTML. Ce fichier est mis à jour et interprété en fonction des ordre transmis pas les télécommandes.

## Description

La présente invention a pour objet un appareil de réception et procédé d'affichage. Le domaine de l'invention est celui des décodeurs, ou STB (Set Top Box). Plus généralement le domaine de l'invention s'étend à la télévision qu'elle soit analogique ou numérique. Les buts de l'invention sont d'une part, de réunir dans une seule et même boîte deux fonctionnalités à l'origine distinctes. La première fonctionnalité est une fonctionnalité de réception et de décodage de programme de télévision, la deuxième fonctionnalité est relative au réseau Internet et à l'affichage des informations qu'il véhicule. D'autre part l'invention a pour but de permettre un affichage simultané d'informations issues du réseau Internet, et d'informations issues d'un opérateur de télévision. Cet affichage doit s'effectuer sans que l'un favorise l'un ou l'autre des flux de données.

Dans l'état de la technique on connaît des téléviseurs qui sont capables de réaliser des incrustations d'images. Il s'agit alors, à partir de deux flux de programmes de télévision, de réaliser une image combinée de ces flux. Si on considère un programme 1 et un programme 2, cela signifie que pendant la visualisation d'un programme 1, un utilisateur d'un tel poste de télévision pourra visualiser en même temps le programme 2. Le programme 2 est alors affiché sur une partie de l'écran et il occulte une partie de l'image du programme 1. Sur les modèles haut de gamme de télévision, il est même possible d'incruster des images correspondant à plus de deux programmes.

Un premier inconvénient de ce système est qu'il occulte une partie de l'image sur laquelle il incruste la deuxième image. Un deuxième inconvénient de ce système, plus important, est qu'il ne permet pas de cohabitation avec l'affichage d'un flux d'information en provenance du réseau Internet. Soit le téléviseur affiche un programme de télévision, soit il affiche des informations en provenance du réseau.

Dans l'état de la technique on connaît aussi l'affichage d'images vidéos grâce à des outils de navigation existants pour l'affichage de l'information issue du réseau Internet. Un navigateur Internet est un outil, le plus souvent informatique, qui permet de visualiser des informations issues du réseau Internet et plus particulièrement de sa composante graphique aussi appelée le "web". Un navigateur Internet comporte donc un microprocesseur commandé par un programme et doté de capacités de communication. Le programme traite les informations reçues en vue de leur affichage sur un écran. Lorsqu'un utilisateur se connecte à un site sur le réseau Internet en utilisant un navigateur, le navigateur télécharge depuis le site des informations à un format spécial en général HTML. HTML signifie Hypertext Language Markup, ou Langage pour l'Edition de lien Hypertexte. Ces informations sont contenues dans un fichier qui, une fois téléchargé complètement est interprété par le navigateur. Ce fichier au format HTML est aussi appelé page Internet. Ce fichier contient des informations de données affichables données et des informations relatives au format dans lequel il faut afficher ces données. Les données peuvent être du texte, des images ou des sons. Ces données à afficher sont décrites à l'aide de leur nom qui permet de les localiser sur le réseau Internet et de les télécharger pour affichage. Cette localisation et ce téléchargement sont effectués par le navigateur, qui ensuite peut afficher les données ainsi téléchargées. Dans un exemple on considère une image dont l'adresse sur le réseau Internet est contenue dans le fichier au format HTML. A la lecture de cette adresse le navigateur se connecte à cette adresse, télécharge l'image, puis l'affiche.

Une page Internet comporte en général les références à d'autres pages, ces références sont affichées dans un format particulier. Le fait d'utiliser un dispositif de pointage pour sélectionner l'une de ces références, sur un écran où elle est affichée, permet de passer d'une page à l'autre. Cette action s'appelle naviguer sur Internet.

Un navigateur est aussi capable d'afficher des images animées, ou de la vidéo. Cependant ces images lui parviennent alors depuis un flux d'information Internet. Ces images lui arrivent alors par un canal dont le débit est en général limité par le nombre d'utilisateurs connectés au moment du téléchargement. Dans la plupart des cas ce débit est trop faible pour permettre l'obtention d'une animation de bonne qualité. En effet les normes spécifiant la visioconférence par exemple prévoient un débit minimum de 64 kilobits par seconde, ce qui est loin d'être le débit minimum alloué à chaque utilisateur lorsqu'il se connecte au réseau Internet. La vidéo par Internet connaît donc des taux de rafraîchissement de l'ordre de une image toutes les deux à trois secondes quand il ne s'agit pas d'une image toutes les quinze secondes. De plus le format de l'image est alors loin d'être en plein écran.

Enfin dans l'état de la technique il est possible de regarder la télévision en utilisant un ordinateur, qui exécuterait dans un même temps un navigateur. Cependant il s'agit alors de deux applications séparées et l'affichage de l'une gênerait considérablement l'affichage de l'autre. De plus il n'y aurait aucune interactivité entre les deux. Enfin l'utilisation d'un tel système nécessite l'emploi d'un clavier et d'une souris qui ne sont pas toujours d'un emploi très instinctif, notamment lors de la sélection d'une émission de télévision.

L'invention résout ces problèmes en l'intégrant dans un même ensemble à un navigateur et un décodeur. Le navigateur est alors capable de commander le décodeur, et d'obtenir à partir de celui-ci des images issues de programme de télévision qu'il pourra afficher comme les éléments d'une page Internet. L'invention a donc pour objet un appareil de réception comportant
- des moyens pour se connecter au réseau Internet et un navigateur pour recevoir de ce réseau Internet des signaux d'une session Internet,
caractérisé en ce qu'il comporte
- un décodeur pour recevoir et décoder des programmes de télévision diffusés par des opérateurs et produire des signaux de programme reçus, et
- des moyens pour analyser dans les signaux de session Internet reçus des informations de commande d'affichage d'image correspondant à des images produites par le décodeur à partir des signaux de programme de télévision reçus.

L'invention a aussi pour objet un procédé d'affichage d'une page d'image résultant d'une session de connexion au réseau Internet dans lequel
- on reçoit du réseau Internet un fichier représentatif de la page d'image qu'on souhaite visualiser,
caractérisé en ce que
- on analyse le contenu du fichier relatif à cette page d'image qui contient des informations relatives à l'emplacement et aux dimensions dans la page d'image d'une fenêtre, et relatives à une origine d'un programme de télévision,
- on extrait des éléments d'images du programme de télévision à afficher, dans une page au format HTML, depuis leur origine.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:

Figure 1 : une illustration des principaux éléments constituant un appareil selon l'invention.

Figure 2 : une illustration d'étapes du procédé selon l'invention.

Figure 3 : une illustration de l'affichage ou d'une page Internet par le procédé selon l'invention.

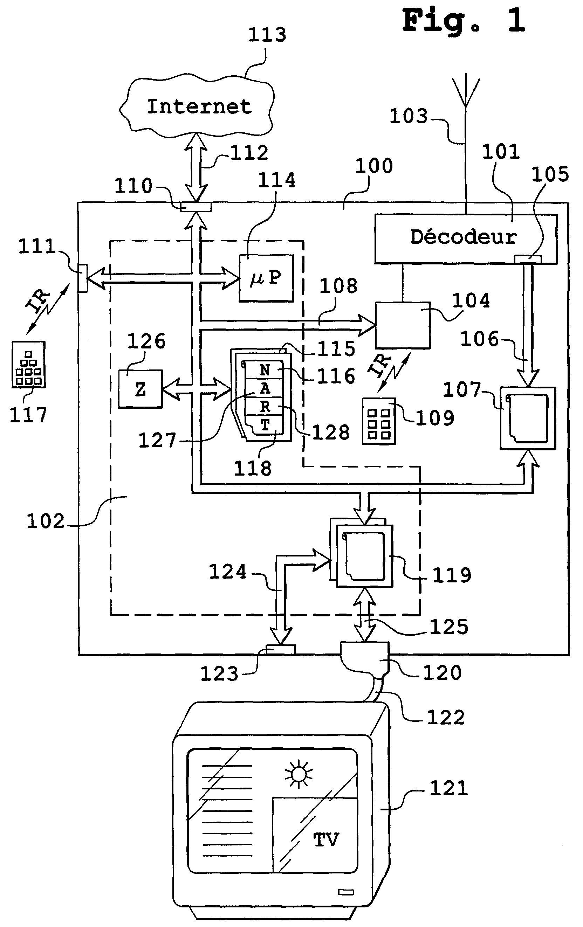

La figure 1 montre un appareil 100 selon l'invention. L'appareil 100 comporte un décodeur 101 et un navigateur 102. Le décodeur 101 est connecté à un flux d'information de programme de télévision par une antenne 103. Cependant le décodeur 101 pourrait très bien être connecté au réseau de télévision câblé, ou à un système de réception par satellite. Le décodeur 101 est d'autre part connecté à un circuit 104 de commande. Dans la pratique le circuit 104 fait partie du décodeur. Le circuit 104 a été ici représenté séparément pour bien mettre en évidence l'interaction qui existe entre le décodeur 101 et le navigateur 102. Le circuit 104 indique au décodeur 101 quel programme de télévision il doit extraire du flux d'information qu'il reçoit par l'antenne 103. Dans le cadre d'une réception analogique traditionnelle, il s'agit de l'accord d'un oscillateur du décodeur 101 sur la fréquence de la porteuse qui porte les informations du programme de télévision qui doit être extrait.

Une sortie 105 du décodeur 101 est connectée à un bus 106. Par une autre extrémité, le bus 106 est connecté à une mémoire 107. Lorsque le décodeur 101 est correctement réglé pour recevoir un programme de télévision sélectionné, le décodeur 101 effectue des traitement sur les signaux qu'il reçoit par l'antenne 103 et correspondant au programme de télévision sélectionné. Une fois ces traitements effectués le décodeur 101 produit des signaux numériques correspondant à des images. Les informations véhiculées par ces signaux numériques sont stockés dans la mémoire107. La mémoire 107 comporte une image complète. Dans un exemple, le décodeur 101 produit des images ayant une résolution de H x L éléments d'image (pixels). La mémoire 107, dans cet exemple, comporte donc des informations concernant H x L pixels.

Il est connu que pour visualiser sans gêne un programme de télévision, il faut que les images de celui-ci soient mises à jour 25 fois par seconde afin que les mouvements qui sont visualisés à l'écran apparaissent comme fluides. Le contenu de la mémoire 107 change donc 25 fois par seconde. Il s'agit ici d'un minimum, dans la pratique le rafraîchissement de la mémoire 107 peut être plus rapide. De même seule une partie de la mémoire 107 peut être mise à jour. En effet il existe à l'heure actuelle des technologies qui permettent de ne transmettre que les différences d'une image à une autre image. Dans ce cas seules les parties de l'image qui ont changé dans la mémoire 107 seront mises à jour.

Le circuit 104 est connecté à un bus 108. Le bus 108 apporte directement au circuit 104 des ordres numériques que celui-ci transforme alors en ordre pour le décodeur 101.

Le navigateur 102 est connecté, par l'intermédiaire du bus 108, à une interface 110 Internet et à un capteur 111, dans cet exemple, infrarouge. Dans la pratique l'interface 110 est connecté par une connexion 112 au réseau 113 Internet. La connexion 112 est bidirectionnelle. L'interface 110 peut être un modem classique, c'est-à-dire que l'on branche sur une ligne du réseau téléphonique commuté. L'interface 110 peut aussi être une interface avec le réseau numérique à intégration de services (RNIS) ou une interface avec un réseau numérique câblé. L'interface 110 produit sur le bus 108 des données numériques correspondant au flux d'informations qui circule sur le réseau Internet 113.

Les données produites par l'interface 110 sont lues par un microprocesseur 114 commandé par un programme contenu dans une mémoire 115. Les éléments 114 et 115 sont connectés au bus 108. La mémoire 115 comporte une zone 116 qui comporte du code instruction correspondant au navigateur. Dans l'exemple de la figure 1 le navigateur est donc un programme. Il pourrait cependant s'agir d'un circuit intégré dont la fonction serait spécialisée dans la navigation sur Internet. Lorsque l'utilisateur utilise une télécommande 117 pour commander l'appareil 100 par l'intermédiaire du capteur 111, il émet un signal infrarouge en direction de ce capteur 111. Ce signal infrarouge est reçu par une cellule infrarouge du capteur 111 qui délivre un signal analogique qui est à son tour converti en données numériques par un convertisseur analogique numérique du capteur 111. Les données numériques produites par le capteur 111 sont alors à la disposition du microprocesseur 114 sur le bus 108. Les traitements des informations reçues par l'interface 110 par le microprocesseur 114 sont fonction des commandes reçues par le capteur 111.

En général la télécommande 117 comporte au moins un dispositif de pointage de type boule de pointage par exemple, et un clavier. Grâce à la télécommande 117, l'utilisateur sélectionne un site du réseau Internet auquel il souhaite que le navigateur 102 se connecte. Le programme 116, va alors commander le microprocesseur 114 pour que celui-ci paramètre l'interface 110 afin que celle-ci lui rapatrie les informations en provenance du site auquel l'utilisateur souhaite se connecter. Lorsque les informations sont reçues, elles sont stockées dans une zone 118 de travail de la mémoire 115. Ces informations sont reçues sous la forme d'un fichier au format HTML. Une fois ces informations reçues et enregistrées dans la zone 118 le microprocesseur les interprète. C'est-à-dire, d'une manière connue, il crée dans une mémoire 119 une image correspondant au fichier format HTML reçu. La mémoire 119 est connectée au bus 108. D'autre part la mémoire 119 est connectée à une interface 120 sur laquelle on peut connecter un dispositif de type écran. Dans la pratique l'interface 120 peut comporter une prise Peritel. Sur l'interface 120 on connecte un écran 121 grâce à un câble 122. L'interface 120 va alors lire le contenu de la mémoire 119 et l'afficher sur l'écran 121. De la même manière une autre zone de la mémoire 119 contient des sons reçus depuis le réseau Internet. Ces sons sont alors disponibles soit par l'interface 120, soit si l'on souhaite seulement récupérer les sons par une interface 123. L'interface 123 et la mémoire 119 sont connectés par un bus 124. L'interface 120 et la mémoire 119 sont connectés par un bus 125.

Dans l'invention, le navigateur 102 comporte aussi un circuit 126 de mise au bon format d'une image, il s'agit d'un circuit de zoom. La mémoire 115 comporte aussi une zone 127 qui comporte des codes instructions permettant d'allouer dans la mémoire 119 une fenêtre pour les visualisations d'une image issue du décodeur. La zone 127 comporte aussi des codes instructions pour la mise à jour ou la création d'un fichier au format HTML permettant de visualiser une image issue du décodeur 101. L'allocation d'une fenêtre de visualisation dans la mémoire 119 correspond au fait que l'utilisateur, via la télécommande 117 ou la télécommande 109, peut choisir quel programme il souhaite regarder et la taille de la fenêtre dans laquelle il souhaite regarder ce programme.

La mémoire 115 comporte aussi une zone 128 qui comporte des codes instructions permettant le rafraîchissement de la fenêtre allouée par la zone 127 en fonction du contenu de la mémoire 107 contenant des images reçues et décodées par le décodeur 101. Il s'agit d'un programme de rafraîchissement.

Dans l'exemple de la figure 1 les zones 127 et 128 correspondent à des sous-programmes qui rendent des services au programme 116. Dans la pratique ces programmes pourraient très bien être remplacés par des circuits spécialisés.

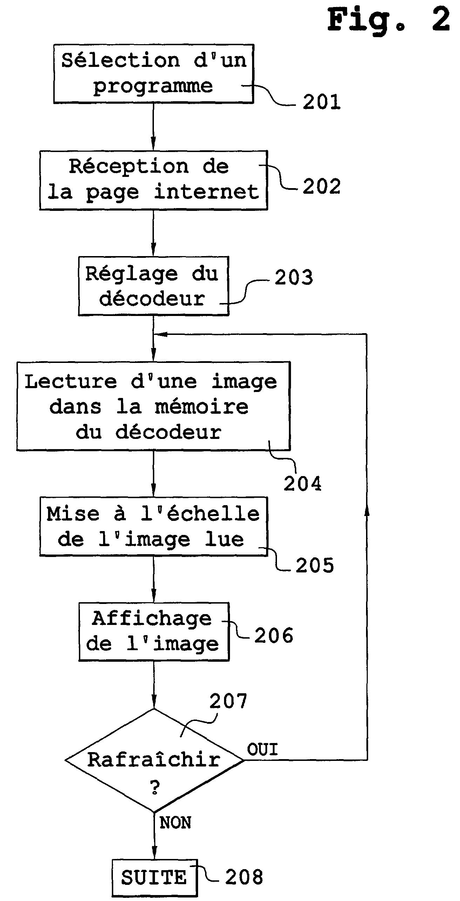

La figure 2 montre une étape 201 préliminaire de sélection d'un programme de télévision. Dans cette étape un utilisateur d'un appareil 100 selon l'invention utilise la télécommande 117 pour sélectionner un programme. Cela signifie qu'il est connecté à un site Intemet qui lui présente, par exemple, les programmes qu'il peut regarder. La présentation de ces programmes de télévision se fait par l'affichage par le navigateur 102 sur l'écran 121 du contenu d'une page Internet contenant des informations relatives aux programmes en cours de diffusion par les différents opérateurs de télévision, et des liens vers des pages Internet diffusant ces programmes. Cette page Internet est contenue dans la mémoire 118 sous forme d'un fichier. Dans ce cas il utilise un dispositif de pointage présent sur la télécommande 117 pour sélectionner le programme, dans la page Internet, qu'il souhaite regarder. Une commande sera alors émise en direction du capteur 111 qui va la mettre, sous forme numérique, sur le bus 108 à la disposition du microprocesseur 114.

On passe alors à une étape 202 de réception d'une page Intemet contenant des informations relatives au programme de télévision sélectionné. Dans cette étape, le microprocesseur 114, commandé par un programme de la mémoire 115, a été averti par voie d'interruption que l'utilisateur souhaite regarder un programme de télévision. L'interruption comporte des informations relatives à son origine, le microprocesseur sait donc qu'il doit demander, à un serveur Internet auquel il est connecté, l'envoi des informations relatives à la page que souhaite regarder l'utilisateur.

Cette nouvelle page contient des informations du type:
TV ://mon Programme
TV indique qu'il s'agit d'un programme de télé qui va être visualisé. Mon Programme quant à lui renseigne sur le programme qui va être visualisé. Les informations concernant les dimensions de la fenêtre de visualisation peuvent s'exprimer sous la forme de deux coordonnés une en x et une en y dans un écran du navigateur tel que visualisé sur l'écran 121 et en deux dimensions pour exprimer la hauteur et la largeur de la fenêtre. Par écran du navigateur, on entend une zone de l'écran 121. Une fenêtre de l'écran du navigateur est donc une zone contenue dans l'écran du navigateur. La fenêtre de navigation est une fenêtre de l'écran du navigateur. Les coordonnées en x et en y indiquent, par exemple, les coordonnées du coin supérieur gauche de la fenêtre de navigation dans l'écran du navigateur. L'écran du navigateur est alors muni d'un repère orthonormé.

On passe alors à une étape 203 de réglage du décodeur et de paramétrage du circuit 126 de zoom. Dans cette étape 203 le programme 116 relit le fichier contenu dans la mémoire 118 et interprète les commandes HTML contenues dans ce fichier. A la lecture de ces commandes, il va commander le circuit 104 afin que celui-ci paramètre le décodeur 101 pour que celui-ci produise des images, dans la mémoire 107, correspondant au programme que souhaite regarder l'utilisateur. Le programme 116 sait qu'il doit commander le décodeur 101 à cause de la mention TV. De même il sait sur quel programme il doit le régler grâce à la mention mon Programme. Une fois le décodeur 101 réglé, il produit des images correspondant au programme que souhaite regarder l'utilisateur.

Le paramétrage du circuit 126 consiste à stocker dans une mémoire de paramètres les indications relatives à la dimension de l'image de télévision dans la page Internet. La lecture de cette mémoire paramètre permet au circuit 126 de fonctionner correctement.

On passe alors à une étape 204 de lecture d'une image dans la mémoire 107 du décodeur. Dans cette étape, le programme 118 commande le circuit 126 afin que celui-ci aille lire le contenu de la mémoire 107. Puis on passe à l'étape 205 de mise à l'échelle des images lues. Dans cette étape, le circuit 126 extrait l'image contenue dans la mémoire 107 et lui applique une transformation qui permet de la faire tenir dans la fenêtre de visualisation de cette image. Une fois que cette mise à l'échelle est faite, on passe à l'étape 206 d'affichage de l'image. Dans la pratique les étapes 204, 205 et 206 ne sont pas aussi séparées que dans la figure 2. Elles l'ont été dans la figure 2 dans un soucis de les faire apparaître. En fait le circuit 126 a été paramètré par le circuit 128 en fonction de l'allocation qui a été effectuée à l'étape 202. S'il s'agit d'une première lecture de la mémoire 107 depuis une commande du décodeur, on paramètre le circuit 126 afin que celui-ci connaisse les dimensions de l'image qu'il doit produire.

Considérant dans un exemple que la fenêtre de visualisation est quatre fois plus petite que l'image contenue dans la mémoire 107. Alors, en considérant l'utilisation d'un algorithme de mise à l'échelle simple, le circuit 126 va lire un pixel sur quatre de l'image contenue dans la mémoire 107, et écrire ces pixels dans la mémoire 119 aux adresses prévues lors de l'allocation. On peut aussi envisager, qu'on ne visualise qu'un quart de l'image contenue dans la mémoire 107. C'est-à-dire, par exemple, la fenêtre de visualisation contient le quart supérieur gauche de l'image contenue dans la mémoire 107.

Après l'étape 206 on passe à une étape 207 de rafraîchissement. Dans cette étape, on rafraîchit le contenu de la fenêtre de visualisation dans laquelle on visualise le programme choisi par l'utilisateur tant que l'utilisateur n'émet pas un souhait contraire. Dans la pratique cela correspond à la répétition des étapes 204 à 206 environ 25 fois par seconde.

Lorsque l'utilisateur ne souhaite plus visualiser un programme, on passe immédiatement à l'étape 208. Dans l'étape 208, l'utilisateur a choisi de continuer à naviguer sur Internet, sans visualiser de programme issu du décodeur 101. Dans la pratique cette volonté de ne plus visualiser de programme peut s'être manifesté par un changement de la page Internet active, la nouvelle page ne contenant plus de référence à un programme de télévision. Dès lors le programme de télévision ne sera plus affiché, sauf si la nouvelle page sélectionnée par l'utilisateur comporte des instructions pour afficher un programme de télévision.

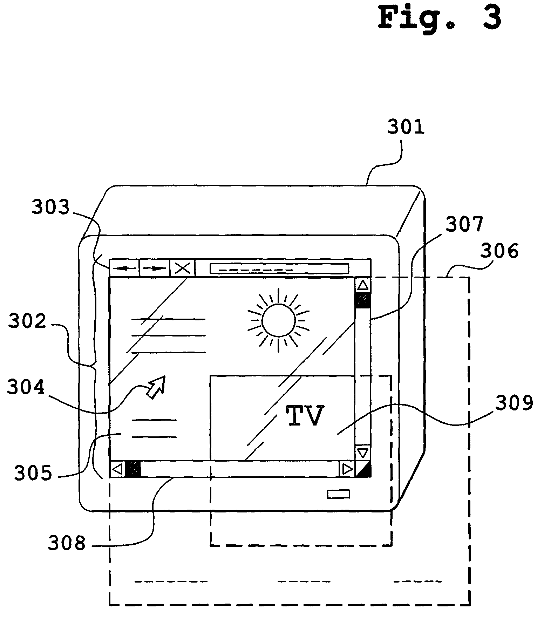

La figure 3 montre un moniteur 301 sur lequel est affiché un écran 302 d'un navigateur. L'écran 302 comporte une barre 303 d'outils. La sélection d'un élément de la barre 303 par un pointeur 304 permet de mettre en oeuvre des fonctions du navigateur. Dans la pratique le pointeur 304 est commandé par le dispositif de pointage de la télécommande 117. L'écran 302 comporte aussi une zone 305 d'affichage de la page Internet. Il se peut que cette zone 305 soit trop petite pour afficher la page 306 Internet au complet. Dans ce cas la zone 305 ne visualise qu'une partie de la page 306 Intemet. Pour visualiser le reste de la page 306, il faut utiliser des zones 307 et 308 dites ascenseurs. On active ces zones 307 et 308 à l'aide du pointeur 304. On peut alors faire défiler le contenu de la page 306 dans la zone 305. Dans l'exemple de la figure 3, la page 306 contient une fenêtre 309 affichant un programme de télévision. Un des intérêts de l'invention, est que la fenêtre 309 peut donc être déplacé en même temps que le contenu de la page 306 à l'aide des zones 307 et 308.

## Revendications

1. Appareil (100) de réception comportant
- des moyens (110, 102) pour se connecter au réseau Internet et un navigateur (102) pour recevoir de ce réseau Internet des signaux d'une session Internet,
caractérisé en ce qu'il comporte
- un décodeur (101) pour recevoir et décoder des programmes de télévision diffusés par des opérateurs et produire des signaux de programme reçus, et
- des moyens (126,114, 108, 107) pour analyser dans les signaux de session Internet reçus des informations de commande d'affichage d'image correspondant à des images produites par le décodeur à partir des signaux de programme de télévision reçus.

2. Appareil selon la revendication 1, caractérisé en ce que
- les moyens pour analyser comportent un circuit (111, 104) pour recevoir d'une télécommande un ordre d'incorporation.

3. Appareil selon l'une des revendications 1 ou 2, caractérisé en ce que les moyens pour analyser comportent
- une mémoire (119) d'image mise à jour par le navigateur,
- un circuit (127) d'allocation pour réserver dans cette image une fenêtre de visualisation,
- un circuit (128) raccordé au décodeur pour mettre à jour une partie de la mémoire d'image correspondant à la fenêtre avec des signaux provenant du décodeur.

4. Appareil selon la revendication 3, caractérisé en ce que
- le circuit raccordé au décodeur comporte un circuit (126) de zoom.

5. Appareil selon l'une des revendications 3 à 4, caractérisé en ce que
- le circuit d'allocation comporte un circuit (126) pour incorporer dans un fichier transmis par le réseau Internet et géré par le navigateur des instructions correspondant à la réservation de la fenêtre et à la programmation du décodeur.

6. Appareil selon l'une des revendications 1 à 5, caractérisé en ce qu'il comporte des moyens (120, 125)pour être connecté à un écran pour visualiser des images correspondant aux signaux de session reçus.

7. Appareil selon l'une des revendications 1 à 6, caractérisé en ce qu'il comporte des moyens (128,108) pour rafraîchir l'image visualisée par le navigateur.

8. Procédé d'affichage d'une page d'image résultant d'une session de connexion au réseau Internet dans lequel
- on reçoit du réseau Internet un fichier représentatif de la page d'image qu'on souhaite visualiser,
caractérisé en ce que
- on analyse (202) le contenu du fichier relatif à cette page d'image qui contient des informations relatives à l'emplacement et aux dimensions dans la page d'image d'une fenêtre, et relatives à une origine d'un programme de télévision,
- on extrait (204) des éléments d'images du programme de télévision à afficher, dans une page au format HTML, depuis leur origine.

9. Procédé selon la revendication 8,
- on règle (203) un décodeur de télévision en fonction d'un programme de télévision que l'on souhaite visualiser dans la page d'image,
- on met (205) à la bonne dimension les images de l'émission à afficher,
- on affiche (206) les images de l'émission à afficher.

10. Procédé selon l'une des revendications 8 ou 9, caractérisé en ce que :
- on sélectionne (201) le programme à afficher à partir d'une page Intemet qui présente les différents programmes de télévision disponibles.

11. Procédé selon l'une des revendications 8 à 10, caractérisé en ce que :
- on sélectionne (201) le programme à afficher en utilisant une télécommande.
